(19) Europäisches Patentamt
European Patent Office
Office européen des brevets

(11) **EP 4 417 386 A1**

(12) **EUROPEAN PATENT APPLICATION**
published in accordance with Art. 153(4) EPC

(43) Date of publication:
**21.08.2024 Bulletin 2024/34**

(21) Application number: **22880891.1**

(22) Date of filing: **05.10.2022**

(51) International Patent Classification (IPC):
**B29B 7/18** (2006.01)    **B29B 7/28** (2006.01)
**B29C 48/40** (2019.01)    **B29C 48/92** (2019.01)

(52) Cooperative Patent Classification (CPC):
**B29B 7/18; B29B 7/28; B29C 48/40; B29C 48/92**

(86) International application number:
**PCT/JP2022/037336**

(87) International publication number:
**WO 2023/063195 (20.04.2023 Gazette 2023/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.10.2021 JP 2021168914**

(71) Applicant: **The Japan Steel Works, Ltd.
Tokyo 141-0032 (JP)**

(72) Inventors:
• **FUROKAWA, Mikio**
  **Tokyo 141-0032 (JP)**
• **OHSHITA, Takeaki**
  **Tokyo 141-0032 (JP)**
• **HIRANO, Takayuki**
  **Tokyo 141-0032 (JP)**

(74) Representative: **Simmons & Simmons LLP
(Munich)
Lehel Carré
Thierschplatz 6
80538 Munich (DE)**

(54) **MOLDING MACHINE SYSTEM, TORQUE DERIVATION SYSTEM, TORQUE DERIVATION METHOD, AND PROGRAM**

(57) To lessen dimensional restrictions on mounting a torque detection device on a molding machine. Provided is a molding machine system provided with: a molding machine having a cylinder, a first screw and a second screw built into the cylinder, and a motor for rotating the first screw and second screw; a torque detection device for detecting torque in the motor as an example of a feature relating to the operating state of the molding machine; a torque detection device for detecting torque of the first screw, the torque detection device being mounted on the axis of rotation of the first screw; and a torque derivation device for deriving torque of the second screw based on torque of the motor detected by the torque detection device and torque of the first screw detected by the torque detection device.

FIG. 7

EP 4 417 386 A1

**Description**

TECHNICAL FIELD

The present invention relates to a molding machine system, a torque derivation system, a torque derivation method and a program for this.

BACKGROUND ART

A molding machine kneads, transports and melts a source material introduced into a cylinder by rotating a screw in the cylinder.

In the molding machine, the screw in use is often broken because of a sort of anomaly. Because of the breakage of the screw, replacement of the screw and interruption of product manufacturing are definitely needed. Therefore, it is important to recognize a state of the screw of the molding machine in use, particularly recognize a torque generated in the screw.

Under the above-described background, a technique of detecting the torque generated in the screw by attaching a torque detecting device to a screw shaft is described in a Patent Document 1.

RELATED ART DOCUMENT

PATENT DOCUMENT

Patent Document 1: International Patent Publication No. WO/2021/074964

SUMMARY OF THE INVENTION

PROBLEMS TO BE SOLVED BY THE INVENTION

Types of the molding machine include a type having a plurality of screws. In case of application of the technique of the Patent Document 1 to the molding machine of this type, the device is attached to each screw shaft.

However, by the attachment of the devices to the respective screws, a volume occupied by the devices is increased, and the attachment of the devices is dimensionally limited.

MEANS FOR SOLVING THE PROBLEMS

A molding machine system according to one embodiment includes a molding machine, a feature-amount identification apparatus, a torque detection device, and a torque derivation apparatus. The molding machine is configured so that a first screw and a second screw embedded in a cylinder are rotationally driven by a motor. The feature-amount identification apparatus identifies a feature amount such as a torque of the motor, related to an operation state of the molding machine. The torque detection device is attached to a rotational shaft of the first screw. The torque derivation apparatus derives a torque of the second screw from the identified feature amount and the detected torque of the first screw.

EFFECTS OF THE INVENTION

According to one embodiment, in a molding machine having a plurality of screws, dimensional limitation in attachment of torque detection devices can be reduced.

BRIEF DESCRIPTIONS OF THE DRAWINGS

FIG. 1 is a diagram showing a hardware configuration of a molding machine system according to a first embodiment.
FIG. 2 is a side view of a molding machine.
FIG. 3 is a top view of the molding machine.
FIG. 4 is a partially-enlarged top view of the molding machine.
FIG. 5 is a partially-enlarged cross-sectional view of the molding machine.
FIG. 6 is a diagram showing a hardware configuration of a control monitor.

FIG. 7 is a diagram showing a functional block configuration of the control monitor.
FIG. 8 is a diagram schematically showing a functional table.
FIG. 9 is a flowchart showing an operation of the molding machine system.

BEST MODE FOR CARRYING OUT THE INVENTION

Embodiments will be explained. Note that each embodiment described below is one example for achieving the invention, and does not limit the technical scope of the invention.
Further, in each of the following embodiments, components having the same function are denoted by the same reference signs, and the repetitive description thereof will be omitted unless otherwise particularly required.

(First Embodiment)

A molding machine system according to a first embodiment will be described. Note that a molding machine according to the present embodiment is a molding machine having two screws, and a twin-screw extruder that executes resin molding is assumed. As other examples of the molding machine, for example, an injection molding machine, a granulator, a film forming machine, and a blow molding machine and others are considered.

<Outline of Molding Machine System>

The molding machine system according to the first embodiment includes a molding machine including: a cylinder; two screws embedded in the cylinder; and a motor rotationally driving the two screws. Further, the molding machine system includes: a feature-amount identification apparatus identifying a feature amount related to an operation state of the molding machine; and a torque detection device attached to a rotational shaft of one of the screws and detecting a torque of the one screw. The molding machine system further includes a torque derivation portion deriving a torque of the other screw from the feature amount identified by the feature-amount identification apparatus and the torque of the one screw detected by the torque detection device.

<Configuration of Molding Machine System>

A hardware configuration of the molding machine system according to the first embodiment will be described.

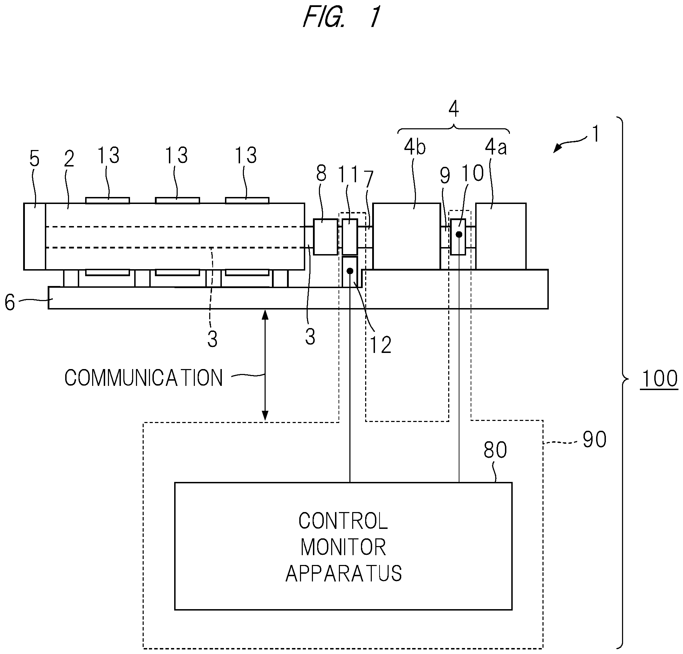

FIG. 1 is a diagram illustrating a hardware configuration of the molding machine system according to the first embodiment. As illustrated in FIG. 1, the molding machine system 100 includes a molding machine 1 and a control monitor system 90. The molding machine 1 and the control monitor system 90 are connected to each other to enable communication of a control signal and data. The connection may be wired or wireless.
A configuration of the molding machine 1 will be described. As illustrated in FIG. 1, the molding machine 1 is arranged on a support stage 6. The molding machine 1 includes a cylinder 2, a screw 3, a rotation driving mechanism 4, a die (mold) 5, and a temperature adjustment portion 13.
The cylinder 2 is configured to enclose the screw 3 therein. An opening portion that enables the source material to be introduced into the cylinder 2 is formed in an upper surface of the cylinder 2. The temperature adjustment portion 13 for adjusting a temperature of the cylinder 2 is arranged on an outer surface of the cylinder 2.
In the cylinder 2, the screw 3 is arranged and supported to be rotatable around a rotational shaft parallel to a longitudinal direction of the screw 3. The screw 3 kneads, transports, and melts the source material introduced into the cylinder 2 when rotating inside the cylinder 2. The rotation driving mechanism 4 is connected to the screw 3.
The rotation driving mechanism 4 includes a motor 4a and a transmission 4b. The transmission 4b is connected to the motor 4a. The transmission 4b is interposed between the motor 4a and the screw 3. The transmission 4b has a function of changing a rotational speed of the motor 4a into a rotational speed suitable for the screw 3. A joint 8 is a member that connects an output shaft 7 of the transmission 4b and the screw 3 to each other. The motor 4a and the transmission 4b are connected to each other by a motor output shaft 9, and a distal end portion of the output shaft 7 of the transmission 4b and a rear end portion of the screw 3 are connected to each other by the joint 8.
Rotational motion of the motor 4a is transmitted to the screw 3 via the motor output shaft 9 of the motor 4a, the transmission 4b, and the output shaft 7 of the transmission 4b so that the screw 3 rotates. That is, when the rotational motion of the motor 4a is transmitted to the transmission 4b, the output shaft 7 of the transmission 4b rotates at an identical or different rotational speed to or from the rotational speed of the motor 4a, and the screw 3 connected to the output shaft 7 rotates at the same rotational speed as that of the output shaft 7.
The die 5 is attached to a distal end of the cylinder 2, that is, to an ahead position in a direction extending from the rotation driving mechanism 4 toward the screw 3. The die 5 functions to mold a molten resin extruded from the cylinder 2 into a predetermined cross-sectional shape and to discharge the molten resin. In the present embodiment, the die 5 is a mold for extrusion molding.

The temperature adjustment portion 13 is arranged on an outer surface of the cylinder 2. The temperature adjustment portion 13 has a function of adjusting the temperature of the cylinder 2. The temperature adjustment portion 13 includes, for example, a heater.

Note that the molding machine 1 is provided with a motor torque meter 10 (that is an example of the feature-amount identification apparatus), a telemeter 11 (that is an example of the torque detection device), and a base portion 12, as components of the control monitor system 90. Details of the motor torque meter 10, the telemeter 11, and the base portion 12 will be described later.

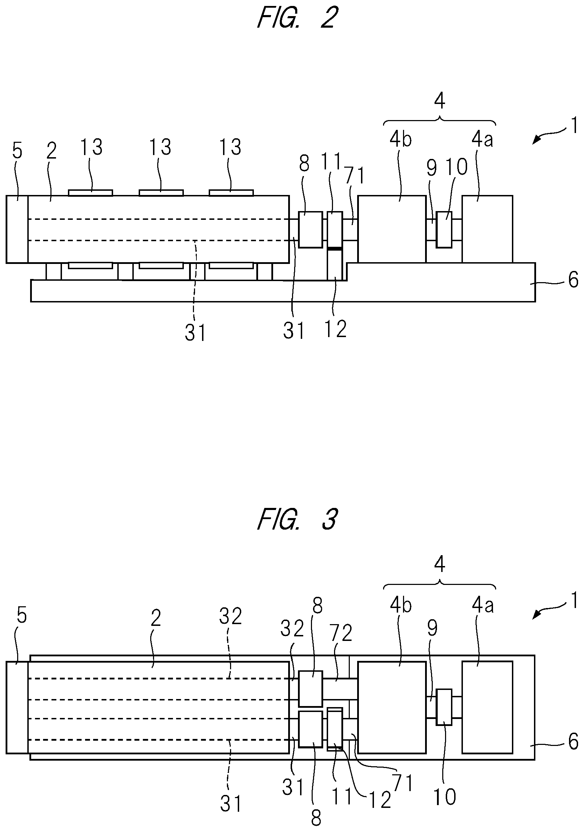

FIG. 2 is a side view of the molding machine, and FIG. 3 is a top view of the molding machine. As illustrated in FIGs. 2 and 3, the screw 3 includes a screw 31 (that is an example of the first screw) and a screw 32 (that is an example of the second screw). The output shaft 7 of the transmission 4b includes an output shaft 71 and an output shaft 72. Here, the screw 31 is referred to as a left screw, and the screw 32 is referred to as a right screw. Further, the output shaft 71 is referred to as a left output shaft, and the output shaft 72 is referred to as a right output shaft. The left screw 31 and the right screw 32 are arranged to engage with each other in the cylinder 2. The left screw 31 rotates around a rotational shaft of the left screw 31, and the right screw 32 rotates around a rotational shaft of the right screw 32.

Although the left screw 31 and the right screw 32 are embedded in the cylinder 2, parts of the left screw 31 and the right screw 32 respectively protrude from an upstream-side end portion of the cylinder 2. The left output shaft 71 of the transmission 4b is connected to a portion of the left screw 31 via the joint 8, the portion protruding from the cylinder 2. Further, the right output shaft 72 of the transmission 4b is connected to a portion of the right screw 32 via the joint 8, the portion protruding from the cylinder 2. Note that the portion of the left screw 31, the portion protruding from the cylinder 2, the joint 8, and the left output shaft 71 of the transmission 4b are an example of the rotational shaft of the first screw in the present invention.

<Configuration of Control Monitor System>

Then, a configuration of the control monitor system 90 will be described. As illustrated in FIG. 1, the control monitor system 90 includes the motor torque meter 10, the telemeter 11, the base portion 12, and a control monitor apparatus 80.

The motor torque meter 10 is connected to the motor 4a to measure a motor torque MT (that is an example of the torque of the motor) as a torque generated in the motor output shaft 9 of the motor 4a. As a specific example, a sensor that detects a strain is attached to the motor output shaft 9 of the motor 4a. The strain in the motor output shaft 9 is detected by the sensor, and the motor torque MT is measured based on a degree of the strain. The motor torque meter 10 continuously measures the motor torque MT at a predetermined time interval of, for example, about 0.1 milliseconds to 10 milliseconds. In the present embodiment, note that the motor torque meter 10 measures the motor torque MT at an interval of one millisecond. The motor torque meter 10 is connected to the control monitor apparatus 80. The motor torque meter 10 sequentially outputs data of the measured motor torque MT to the control monitor apparatus 80.

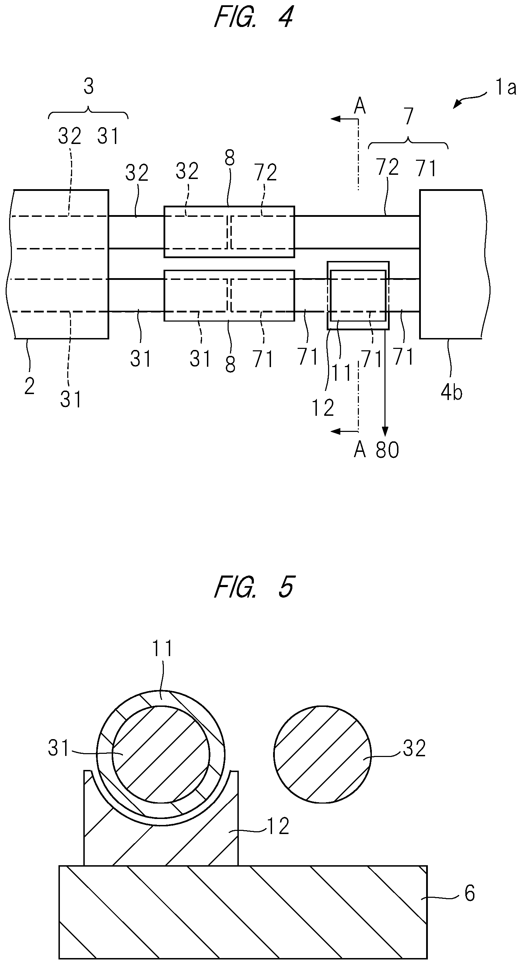

FIG. 4 is a partially-enlarged top view of the molding machine. FIG. 4 is a diagram illustrating a portion 1a including a space from the transmission 4b to the cylinder 2 as viewed from above. Further, FIG. 5 is a partially-enlarged cross-sectional view of the molding machine. FIG. 5 is a cross-sectional view at a position taken along a line A-A in FIG. 4.

As illustrated in FIG. 4, the telemeter 11 is attached to the left output shaft 71 of the transmission 4b. The left output shaft 71 is connected to the left screw 31 by the joint 8, and the telemeter 11 detects or senses a state related to motion or deformation of the left screw 31.

As the telemeter 11, a telemeter disclosed in, for example, International Patent Publication No. WO/2021/074964 that is a patent document can be used. The telemeter 11 includes, for example, a sensor that outputs a signal corresponding to a degree of the deformation or the strain of an object. The sensor includes, for example, an element having an electrical resistance value changed by the deformation or the strain of the object.

When the left screw 31 rotates to apply the torque to the left screw 31, the left screw 31 itself is slightly deformed. The above-described element is also deformed by the deformation of the screw, and the electrical resistance value of the element is changed. The electrical resistance value of the element is read out to recognize the degree of the deformation and time change of the deformation. By such a principle, it is recognized how much and in which direction the deformation has occurred, and, as a result, the state of the screw can be sensed.

As the state of the left screw 31, the telemeter 11 can detect torsional strain, bending strain, thermal strain, a torque, bending, a deformation degree, a deformation mode, vibration, a vibration degree, a vibration mode, or fatigue caused by accumulation of these factors, a fatigue degree, and the like.

In the present embodiment, the telemeter 11 detects at least a left screw torque T1 (that is an example of the torque of the first screw) generated in the left screw 31. The telemeter 11 continuously detects the left screw torque T1 at a predetermined time interval such as an interval of about 0.1 milliseconds to 10 milliseconds. In the present embodiment, note that the telemeter 11 detects the left screw torque T1 at an interval of one millisecond.

Note that an attachment position of the telemeter 11 is not limited to the above-described position. The attachment position of the telemeter 11 may be, for example, a portion of the left screw 31, the portion protruding from the cylinder 2, or a portion of the joint 8, the portion joining the left output shaft 71 and the left screw 31 to each other. Alternatively, the telemeter 11 may be embedded in the joint 8.

As illustrated in FIG. 5, the base portion 12 is arranged on the support stage 6. The base portion 12 is arranged at a position having a predetermined spatial distance from and facing the telemeter 11 attached to the left screw 31. The telemeter 11 is rotated together with the left screw 31 by rotation of the left screw 31 and the right screw 32.

The base portion 12 can supply power to the telemeter 11 by using wireless power transmission using a coil. Further, a wireless communication apparatus is embedded in each of the telemeter 11 and the base portion 12. The base portion 12 is connected to the telemeter 11 under wireless communication, and data can be transmitted and received therebetween. The base portion 12 sequentially receives the left screw torque T1 detected by the telemeter 11. The base portion 12 is connected to the control monitor apparatus 80, as illustrated in FIG. 1 or 4. The base portion 12 sequentially outputs data of the left screw torque T1 detected by the telemeter 11 to the control monitor apparatus 80.

<Hardware Configuration of Control Monitor Apparatus>

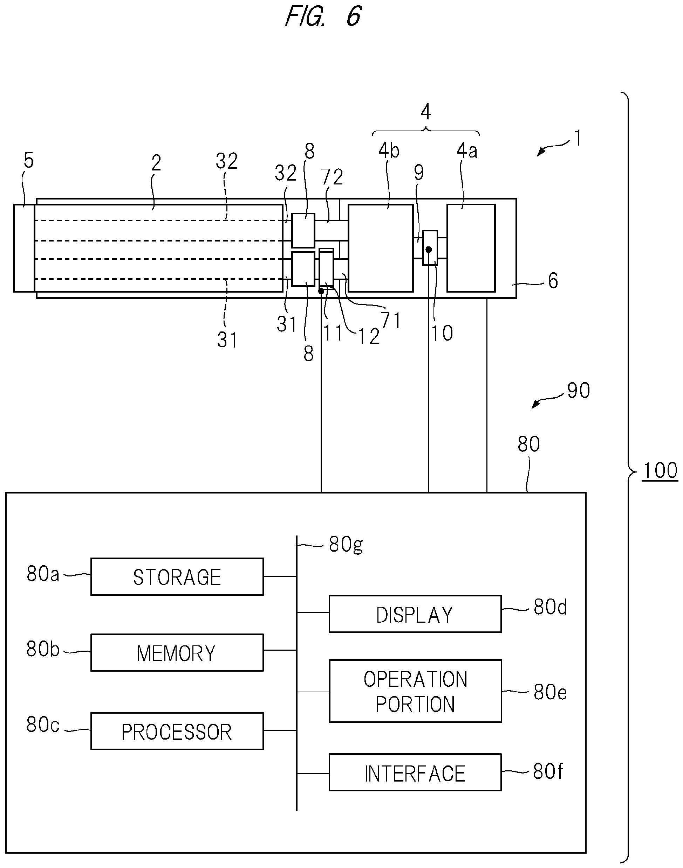

FIG. 6 is a diagram illustrating a hardware configuration of the control monitor apparatus.

As illustrated in FIG. 6, the control monitor apparatus 80 includes a storage 80a, a memory 80b, a processor 80c, a display 80d, an operation portion 80e, and an interface 80f. The storage 80a to the interface 80f are connected to a bus 80g that is a data transmission channel, and can transmit and receive a signal or data to and from one another. The control monitor apparatus 80 is made of, for example, a computer or the computer and peripheral equipment connected to the computer.

The storage 80a stores various types of program and various types of data. The various types of program include, for example, an operating system, a device driver, a control monitor program and others. The various types of data include, for example, data to be used when the control monitor program is executed. The storage 80a is made of, for example, an SSD (Solid State Drive), a HDD (Hard Disk Drive), an eMMC (embedded Multi Media Card), a UFS (Universal Flash Storage), an SD (Secure Digital) card, a USB (Universal Serial Bus) flash drive, an optical disk or others.

The memory 80b temporarily stores data to be processed by the processor 80c. The memory 80b is made of, for example, a semiconductor memory represented by a RAM (Random Access Memory).

The processor 80c executes various types of arithmetic processing or various types of data processing. The processor 80c executes the program stored in the storage 80a by using the memory 80b or the like to be functioned as various types of functional blocks. The processor 80c is made of, for example, a MPU (Micro-Processing Unit), a CPU (Central Processing Unit) or others.

The display 80d displays an image or text information on a screen. The display 80d is made of, for example, a liquid crystal display, an organic EL (Organic Electro-Luminescence) display, a display with a touch panel or others.

The operation portion 80e receives various types of operations executed by a user. The operation portion 80e is made of, for example, a keyboard, a mouse, a touch panel or others.

The interface 80f is connected to external equipment, and transmits and receives data thereto/therefrom. In the present embodiment, the interface 80f is connected to the base portion 12 and the motor torque meter 10. The interface 80f receives data acquired by the base portion 12 and corresponding to the left screw torque T1 detected by the telemeter 11. Further, the interface 80f receives data corresponding to the motor torque MT measured by the motor torque meter 10. The interface 80f causes the memory 80b to store the received data or stores the received data into the storage 80a.

<Functional Block Configuration of Control Monitor Apparatus>

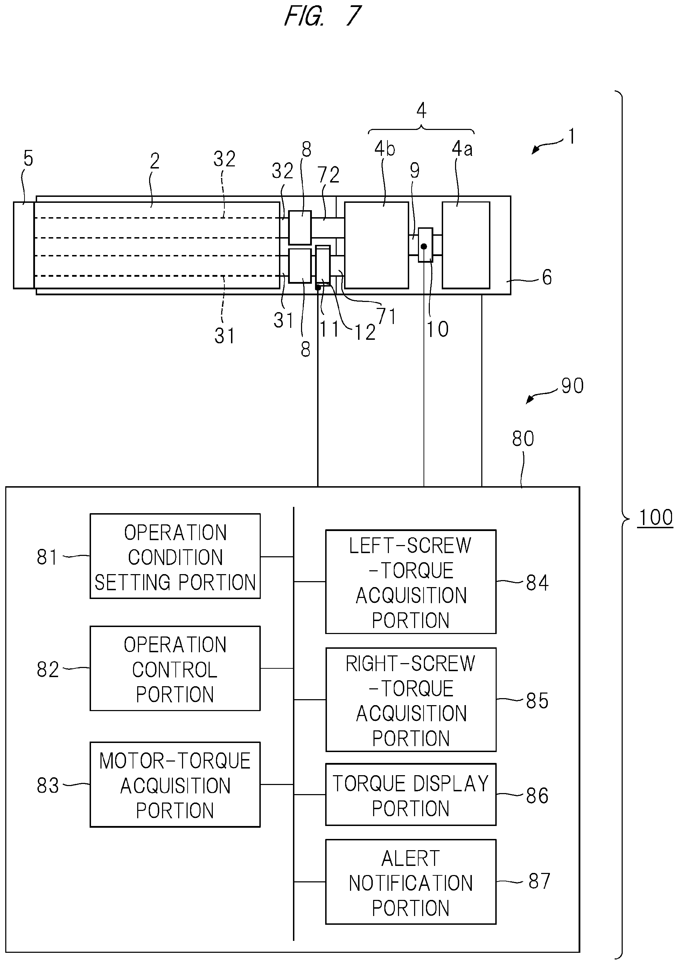

FIG. 7 is a diagram illustrating a functional block configuration of the control monitor apparatus.

As illustrated in FIG. 7, the control monitor apparatus 80 includes an operation condition setting portion 81, an operation control portion 82, a motor-torque acquisition portion 83 (that is an example of the feature-amount identification apparatus), a left-screw-torque acquisition portion 84 (that is an example of a first-screw-torque acquisition apparatus), a right-screw-torque derivation portion 85 (that is the torque derivation apparatus and an example of a second-screw-torque derivation apparatus), a torque display portion 86 (that is an example of the display portion), and an alert notification portion 87 (that is an example of a notification portion). Each of the portions configuring the control monitor apparatus 80 is achieved when the processor 80c executes the control monitor program stored in the storage 80a.

The operation condition setting portion 81 sets operation conditions of the molding machine 1 on the basis of an input operation from the user. As the operation conditions, for example, a source material (a main material, a main additive, etc.) to be introduced into the molding machine 1, a blending ratio of a material configuring the source material, a cylinder diameter, a cylinder length, a cylinder temperature, a screw rotational speed, a processing amount per unit time, a speed change ratio of the transmission, a screw configuration and others are considered.

The operation control portion 82 controls the motor 4a, the transmission 4b, and the temperature adjustment portion 13 on the basis of the set operation conditions. The operation control portion 82 controls ON/OFF of driving of the motor 4a and others in response to the operation by the user. The operation control portion 82 sets, for example, the electric current to be supplied to the motor 4a or the speed change ratio of the transmission 4b such that the rotational speed of the output shaft 7 of the transmission 4b is the set screw rotational speed. Further, for example, the temperature adjustment portion 13 is controlled such that a temperature of the cylinder 2 is the set cylinder temperature. Note that the operation control portion 82 may control the motor 4a to turn off the rotation driving in response to reception of an alert signal described later.

The motor-torque acquisition portion 83 acquires the motor torque MT that is the torque generated in the motor output shaft 9 of the motor 4a. In the present embodiment, the torque measured by the motor torque meter 10 provided in the motor output shaft 9 of the motor 4a is acquired as the motor torque MT. As described above, the motor torque meter 10 measures the motor torque MT at the interval of, for example, one millisecond, and sequentially outputs the signal representing the measurement result. The motor-torque acquisition portion 83 sequentially receives the signal output from the motor torque meter 10, and acquires the motor torque MT of the motor 4a that is the measurement value.

Note that the motor-torque acquisition portion 83 may acquire a torque estimated based on a motor electric current supplied to the motor 4a as the motor torque MT. It is known that the torque of the motor is generally substantially proportional to the motor electric current to be supplied to the motor. Accordingly, the motor torque MT can be estimated by multiplication of the motor electric current by a predetermined coefficient. If the motor torque is estimated from the motor electric current, it is unnecessary to attach the motor torque meter 10 to the motor 4a, and therefore, space saving and reductions in attachment cost and maintenance cost can be achieved.

The left-screw-torque acquisition portion 84 is connected to the base portion 12. The left-screw-torque acquisition portion 84 acquires the left screw torque T1 generated in the left screw 31 and detected by the telemeter 11 via the base portion 12. As described above, the telemeter 11 measures the left screw torque T1 at the interval of, for example, one millisecond, and sequentially outputs the signal representing the measurement result. The base portion 12 sequentially acquires the left screw torque T1 output from the telemeter 11, and outputs the left screw torque T1 to the left-screw-torque acquisition portion 84. The left-screw-torque acquisition portion 84 sequentially acquires the left screw torque T1 output from the base portion 12.

The right-screw-torque derivation portion 85 derives a right screw torque T2 (that is an example of the torque of the second screw) that is a torque generated in the right screw 32 on the basis of the acquired motor torque MT and left screw torque T1 and a function determined in accordance with the set operation condition. The right screw torque T2 is derived for every acquisition of the motor torque MT and the left screw torque T1. The right-screw-torque derivation portion 85 stores a function to be used to derive the right screw torque T2. The function is stored as a table obtained by correspondence between the operation condition of the molding machine 1 and a function to be used when the molding machine 1 is operated under the operation condition. The function is previously obtained for each of the operation conditions on the basis of a simulation result or the like as a result of an actually-executed test. Note that details of a method of deriving the right screw torque T2 will be described later.

The torque display portion 86 has a function of displaying the motor torque MT, the left screw torque T1, and the right screw torque T2 in substantially real time. Further, the torque display portion 86 has a function of displaying a graph in which respective torque time changes of the left screw torque T1 and the right screw torque T2 are illustrated on the same time axis. The torque display portion 86 can independently control ON/OFF of each of the above-described functions in response to the operation by the user. When each of the above-described functions is turned ON, the torque display portion 86 displays each torque value or the graph at a predetermined time interval.

In the present embodiment, the torque display portion 86 displays each torque value or the graph representing the torque time change on the display 80d of the control monitor apparatus 80. As another example, for example, each torque value or graph information may be transmitted to a monitor system provided in a different room from a manufacturing room provided with the molding machine 1, and may be displayed on a display of the monitor system. Alternatively, for example, each torque value or the graph information may be transmitted via a server to a management system provided in a management center at a remote location, and may be displayed on a display of the management system.

The alert notification portion 87 outputs an alert when at least one of the motor torque MT, the left screw torque T1, and the right screw torque T2 satisfies a determined condition such as a condition under which anomaly has been observed. The alert notification portion 87 may output an alert signal for turning OFF the driving of the motor 4a to the operation control portion 82 when outputting the alert.

The alert notification portion 87 outputs the alert when, for example, an average value or a peak value per unit time of the motor torque MT exceeds a threshold value THm. Alternatively, the alert notification portion 87 outputs the alert when, for example, an average value or a peak value per unit time of the left screw torque T1 exceeds a threshold value TH1. Alternatively, the alert notification portion 87 outputs the alert when, for example, an average value or a peak value per unit time of the right screw torque T2 exceeds a threshold value TH2.

The alert notification portion 87 causes the display 80d of the control monitor apparatus 80 to display the alert information when outputting the alert. Note that the control monitor apparatus 80 may cause a loudspeaker to output an alert sound if including the loudspeaker. As another example, for example, the alert signal may be transmitted to the monitor system provided in the different room from the manufacturing room provided with the molding machine 1, and may cause the display or the loudspeaker of the monitor system to output the alert. Alternatively, for example, the alert signal may be transmitted to the management system provided in the management center at the remote location, and may cause the display or the loudspeaker of the management system to output the alert.

<Method of Deriving Right Screw Torque>

Here, a method of deriving the right screw torque T2 will be described in detail.

From a measurement result of the molding machine 1 using a practical machine, the applicant of the present invention has found that there is a correlation among the motor torque MT, the left screw torque T1, and the right screw torque T2. The found correlation is expressed by the following equation 1.

$$T2 = f(MT, T1)...(Equation\ 1)$$

Here, a term "f(MT, T1)" is a function outputting the right screw torque T2 while using the motor torque MT and the left screw torque T1 as input parameters. The function "f" may be a linear function or a nonlinear function. That is, the function f may be a linear function or a quadric or higher-order function.

The function f can be expressed by, for example, the following equation 2 as a specific example of a simple form.

$$T2 = f(MT, T1) = MT \times k - T1 + t ...(Equation\ 2)$$

Here, a term "k" is a coefficient by which the motor torque MT is multiplied, and a term "t" is a constant added to a term including the left screw torque T1.

It has been found that the function f suitable for calculating the right screw torque T2 is not always constant but changes depending on the operation condition including the configuration of the molding machine 1 or the introduced source material. Therefore, practically, the function f to be used for each operation condition is found based on results of various practical machine measurements executed while changing the operation condition.

For example, after the function f to be used for each operation condition is found, a table (hereinafter referred to as a function table) obtained based on correspondence for each operation condition between the operation condition and the function f to be used when the molding machine 1 is operated under this operation condition is previously prepared. The prepared function table is previously stored in the right-screw-torque derivation portion 85.

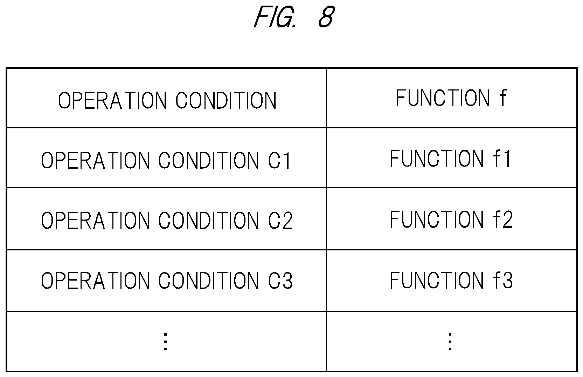

FIG. 8 is a diagram schematically illustrating the function table. As illustrated in FIG. 8, the function table is prepared based on the correspondence for each operation condition between the operation condition and the function f to be used when the molding machine 1 is operated under this operation condition. In the function table illustrated in FIG. 8, for example, an operation condition C1 and a function f1 are corresponded to each other, and an operation condition C2 and a function f2 are corresponded to each other. That is, the function f1 is used as the torque derivation function when the operation condition C1 is set, and the function f2 is used as the torque derivation function when the operation condition C2 is set.

When the operation condition is set by the operation condition setting portion 81, the right-screw-torque derivation portion 85 reads out the function f corresponding to the set operation condition with reference to the function table. The read-out function f is determined as the torque derivation function. Then, the acquired left screw torque T1 and motor torque MT are input as the parameters to the determined torque derivation function, and the right screw torque T2 is derived and output.

Note that the operation condition is made of a lot of items. The function f may be determined for each combination of all the items configuring the operation condition. However, in this case, it takes considerable time to determine the function f for each operation condition, i.e., to prepare the function table.

Therefore, practically, items that more contribute to the determination (configuration) of the function f among the items configuring the operation condition may be identified, and then, a suitable function f may be determined for each combination of the identified items. Although being just an example, the suitable function f may be determined for each combination of, for example, the "cylinder diameter", the "cylinder length" and the "screw rotational speed".

Note that the torque derivation function may be determined by finding the coefficient or the constant configuring the function from an arithmetic equation based on elements configuring the operation condition.

<Flow of Operation of Molding Machine System>

An operation of the molding machine system 100 will be described.

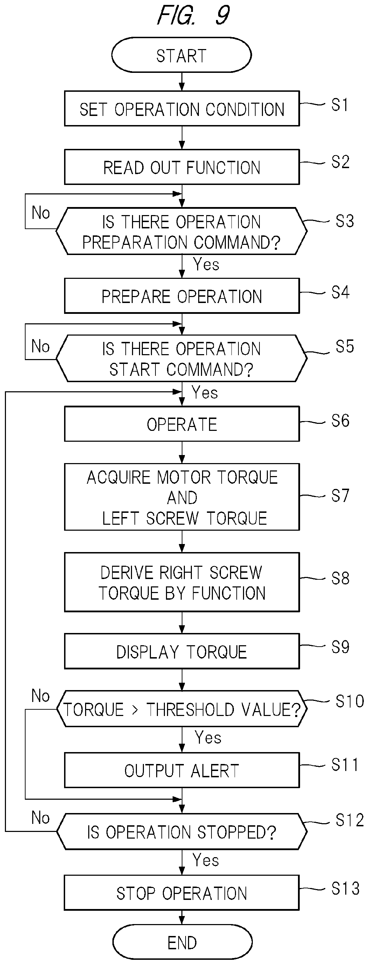

FIG. 9 is a flowchart illustrating the operation of the molding machine system. As illustrated in FIG. 9, in step S1, operation-condition setting processing is executed. Specifically, the operation condition setting portion 81 executes processing for setting the operation condition of the molding machine 1 in response to an operation by the user. As the operation condition, as described above, the items such as the source material (the main material, the main additive, etc.) to be introduced into the molding machine 1, the blending ratio of the material configuring the source material, the cylinder diameter, the cylinder length, the cylinder temperature, the screw rotational speed, the processing amount per unit time, the speed change ratio of the transmission, and the screw configuration are set.

In step S2, function reading-out processing is executed. Specifically, the right-screw-torque derivation portion 85 executes processing for reading out and determining the function to be used to derive the right screw torque T2 on the basis of the set operation condition. Here, with reference to the function table, this read out the function corresponding to the set operation condition, and determines the read-out function as the torque derivation function.

In step S3, processing for determining presence or absence of an operation preparation command is executed. Specifically, the operation control portion 82 executes processing for determining whether or not the operation preparation command has been input by the user. Here, if it is determined that the operation preparation command has been input (S3: Yes), the procedure proceeds to step S4. If it is determined that the operation preparation command has not been input (S3: No), the procedure returns to step S3.

In step S4, operation-preparation processing is executed. Specifically, the operation control portion 82 executes various types of processing for preparing the operation of the molding machine 1. For example, the speed change ratio of the transmission 4b is set such that the screw 3 rotates at a set screw rotational speed. Further, for example, the temperature adjustment portion 13 starts to be controlled such that the cylinder 2 reaches a set temperature.

In step S5, processing for determining presence or absence of an operation start command is executed. Specifically, the operation control portion 82 executes processing for determining whether or not the operation start command has been input by the user. Here, if it is determined that the operation start command has been input (S5: Yes), the procedure proceeds to step S6. If it is determined that the operation start command has not been input (S5: No), the procedure returns to step S5.

In step S6, operation processing is executed. Specifically, the operation control portion 82 executes various types of processing for operating the molding machine 1. For example, the electric current starts to be supplied to the motor 4a to drive the motor 4a.

In step S7, motor-torque and left-screw-torque acquisition processing is executed. Specifically, the motor-torque acquisition portion 83 executes processing for sequentially acquiring the motor torque MT measured by the motor torque meter 10. The left-screw-torque acquisition portion 84 executes processing for sequentially acquiring the left screw torque T1 detected by the telemeter 11.

In step S8, right-screw-torque derivation processing is executed. Specifically, the right-screw-torque derivation portion 85 executes processing for inputting the motor torque MT and the left screw torque T1 to the torque derivation function determined in step S2 and sequentially calculating the right screw torque T2.

In step S9, torque display processing is executed. Specifically, the torque display portion 86 executes processing for sequentially updating and displaying the left screw torque T1 or a numerical value based on the left screw torque T1 and the right screw torque T2 or a numerical value based on the right screw torque T2 on the screen of the display 80d. Further, the torque display portion 86 executes processing for updating and displaying the graph representing time change of the left screw torque T1 or the numerical value based on the left screw torque T1 and the right screw torque T2 or the numerical value based on the right screw torque T2 on the same time axis at the predetermined time interval on the same screen. The torque display portion 86 may further execute processing for displaying the motor torque MT or a numerical value based on the motor torque MT or a time change of the motor torque MT or the numerical value based on the motor torque MT.

In step S10, torque-threshold-value determination processing is executed. Specifically, the alert notification portion 87 executes processing for determining, for each of the motor torque MT, the left screw torque T1, and the right screw torque T2, whether or not an average value within a predetermined time period exceeds a threshold value set therein. If it is determined that any one of the torques has exceeded the threshold value (S10: Yes), the procedure proceeds to step S11. If it is determined that any one of the torques has not exceeded the threshold value (S10: No), the procedure proceeds to step S12.

In step S11, alert output processing is executed. Specifically, the alert notification portion 87 executes processing for displaying the alert information on the screen of the display 80d. Further, here, the alert notification portion 87 executes processing for outputting the alert signal to the operation control portion 82.

In step S12, operation-stop determination processing is executed. Specifically, the operation control portion 82 executes processing for determining whether or not the operation is to be stopped. For example, it is determined whether or not an operation stop command has been input by the user, or it is determined whether or not the alert signal has been received. If the operation stop command has been input or if the alert signal has been received, it is determined that the operation is to be stopped. Here, if it is determined that the operation is to be stopped (S12: Yes), the procedure proceeds to step S13. If it is determined that the operation is not to be stopped (S12: No), the procedure returns to step S7, and then, the operation is continued.

In step S13, operation stop processing is executed. Specifically, the operation control portion 82 executes various types of processing for stopping the operation. For example, the operation control portion 82 stops supplying the electric current to the motor 4a. Further, for example, the operation control portion 82 stops supplying the electric current to the temperature adjustment portion 13 when receiving the alert signal.

Note that the order of the processings in the above-described respective steps may be reordered in a range without any trouble in operating and monitoring the molding machine 1.

According to the first embodiment based on the above-described configuration, it is unnecessary to attach the torque detection device to all screws. Accordingly, in the molding machine having the plurality of screws, the dimensional limitation in the attachment of the torque detection device can be reduced. For example, even if it is difficult to attach the torque detection device to each of the screws because a distance between the shafts of the two screws is small, it is only necessary to attach the device to one of the screws, and therefore, the dimensional limitation in the device attachment can be reduced. Further, the torque detection device and its maintenance cost can be reduced.

Further, in the first embodiment, even if the torque detection device is not attached to all the screws, the torques respectively generated in all the screws can be recognized and appropriately managed and monitored. For example, in the molding machine, wear or breakage of the screw in use and the like may occur due to any anomaly. If this occurrence is minor, the operation can be continued. However, this occurrence may increase a risk of occurrence of anomaly in a quality of a molded product. If a degree of the anomaly increases, it is necessary to replace the screw, and it is necessary to forcibly interrupt the manufacturing of the product. Accordingly, when the state of the screw, particularly the torque generated in the screw, is recognized during the use of the molding machine, the state of the molding machine or the molded product can be appropriately managed.

Further, since the first embodiment includes the torque display portion 86 as described above, the user can visually confirm the torque generated in the shaft of the motor or the screw, and intuitively recognize whether or not there is no anomaly.

Further, since the first embodiment includes the alert notification portion 87 as described above, the alert is emitted when the anomaly is observed in the torque of the motor or the screw. Therefore, the user can early find the anomaly of the torque, and instantly take measures to suppress a degree of damage or crisis. Further, when the anomaly is observed in the torque of the motor or the screw, the operation of the molding machine can also be automatically stopped. Therefore, even if the user is not close to the molding machine, the degree of the damage or the crisis can be minimized.

(Second Embodiment)

In the first embodiment, the right screw torque T2 is derived by the function. However, in a second embodiment, a right screw torque T2 is found by a model prepared by machine learning.

The right-screw-torque derivation portion 85 finds the right screw torque T2 by using the model prepared by the machine learning using a production-system model. Specifically, a model using the operation condition, the motor torque MT and the left screw torque T1 as inputs and using the right screw torque T2 as an output is previously prepared by the machine learning. As learning data, the machine learning uses the data of the operation condition, the torque or others obtained by the practical machine measurement while variously changing the operation condition. Then, when the set operation condition, the measured motor torque MT and the acquired left screw torque T1 are input to the prepared model, the right screw torque T2 is acquired as the output.

Even in the second embodiment as described above, the right screw torque T2 can be derived, and the similar effect to that of the first embodiment can be acquired.

(Third Embodiment)

In the first embodiment, the twin-screw extruder in which the two screws are embedded in the cylinder is assumed as the molding machine 1. In a third embodiment, a multi-screw extruder in which three or more screws are embedded in the cylinder is assumed as the molding machine 1.

In the present embodiment, the torque detection device is attached to (N-1) screws among N screws. Then, a torque to be generated in the screw to which the torque detection device is not attached is derived on the basis of the detected torque generated in the (N-1) screw and the motor torque MT. The function found by the practical machine measurement or the model prepared by the machine learning can be used for the derivation.

Even in the third embodiment as described above, it is unnecessary to attach the torque detection device to all the screws, and therefore, the dimensional limitation in the attachment portion of the torque detection device in the molding machine can be reduced. Further, the torque detection device and its maintenance cost can be reduced.

In each of the above-described embodiments, note that the motor torque is identified as the feature amount related to the operation state of the molding machine. However, the feature amount is not limited to this. For example, the feature amount may be an extrusion amount, the number of revolutions of the motor or the screw or others. Alternatively, the motor torque may be estimated based on the extrusion amount, the number of revolutions of the motor or the screw or others.

Further, as the method of deriving the right screw torque in each of the above-described embodiments, the motor torque is found based on the operation information, and the right screw torque is found based on the motor torque and the left screw torque found by the device. However, as another derivation method, a method of directly estimating the right screw torque from the operation information and the left screw torque obtained by the device is also considerable.

(Fourth Embodiment)

A program to be executed by a computer, the program deriving the torque of the screw configuring the molding machine, or a computer readable recording medium on which the program is recorded is also an example of an embodiment.

The above-described program causes the computer to execute a feature-amount acquisition step, a left-screw-torque acquisition step, and a right-screw-torque derivation step. The molding machine includes a cylinder, a left screw and a right screw embedded in the cylinder, and a motor rotationally driving the left screw and the right screw. The feature-amount acquisition step is a step of acquiring the feature amount identified by a feature-amount identification apparatus identifying the feature amount related to the operation state of the molding machine. The left-screw-torque acquisition step is a step of acquiring the torque of the left screw detected by the torque detection device attached to the rotational shaft of the left screw. The right-screw-torque derivation step is a step of deriving the torque of the right screw from the acquired feature amount and the acquired torque of the left screw.

Here, the left-screw-torque derivation step may be a step of deriving the torque of the right screw by using the torque derivation function outputting the torque of the right screw in response to the input of the feature amount and the torque of the right screw.

Further, the right-screw-torque derivation step may be a step of determining the torque derivation function in accordance with the operation condition of the molding machine.

Further, the right-screw-torque derivation step may be a step of determining the function corresponding to the set operation condition with reference to the table obtained based on the correspondence for each operation condition between the operation condition and the function to be used when the molding machine is operated under this operation condition, and then, determining the determined function as the torque derivation function.

Further, the table may be obtained based on the correspondence for each combination between combination of the plurality of items and the function corresponding to this combination, the items being the source material to be introduced into the molding machine, the blending ratio of the material configuring the source material, the cylinder diameter, the cylinder length, the cylinder temperature, the respective rotational speeds of the left screw and the right screw, the processing amount per unit time, the speed change ratio of the transmission interposed between the motor and the left and right screws, and the respective configurations of the left screw and the right screw.

The right-screw-torque derivation step may be a step of deriving the torque of the right screw from the model prepared by the machine learning. Further, the feature amount may be the motor torque.

When the computer is caused to execute the program described in the fourth embodiment as described above, the similar effect to that of the first embodiment can be obtained.

In the first to fourth embodiments, the right screw torque is derived from the feature amount related to the operation state of the molding machine, such as the motor torque and the left screw torque obtained by the device attached to the left screw. However, the left screw torque may be of course derived from the feature amount related to the operation state of the molding machine, such as the motor torque and the right screw torque obtained by the device attached to the right screw.

In the foregoing, various embodiments of the invention have been concretely described. However, the present invention is not limited to the foregoing embodiments, and includes various modification examples. The above-described embodiments have been explained in detail for easily understanding the present invention, and are not always limited to the one including all structures explained above. Also, a part of the structure of one embodiment can be replaced with the structure of another embodiment, and besides, the structure of another embodiment can be added to the structure of one embodiment. Further, the numerical values, the messages and others in the texts and drawings are merely examples, and even usage of different numerical values, messages and others does not lose the effect of the present invention.

Another configuration may be added to/ eliminated from/ replaced with a part of the configuration of each embodiment. A part or all of the configurations, the functions, the processors, the processing means and others may be achieved by, for example, hardware obtained by designing of an integrated circuit or others. Alternatively, each configuration, each function and others may be achieved by software obtained by interpreting and executing a program enabling a microprocessor such as a MPU and a CPU to achieve each function. A range of the function achieved by the software is not limited, and the hardware and the software may be used together. Information such as a program, a table, and a file achieving each function can be stored in a recording device such as a memory, a hard disk and an SSD, or in a recording medium such as an IC card, an SD card and a DVD.

EXPLANATION OF REFERENCE CHARACTERS

1 ... molding machine, 2 ... cylinder, 3 ... screw, 31 ... left screw, 32 ... right screw, 4 ... rotation driving mechanism, 4a ... motor, 4b ... transmission, 5 ... die, 6 ... support stage, 7 ... output shaft, 71 ... left output shaft, 72 ... right output shaft, 8 ... joint, 9 ... motor output shaft, 10 ... motor torque meter, 11 ... telemeter, 12 ... base portion, 13 ... temperature adjustment portion, 80 ... control monitor apparatus, 81 ... operation condition setting portion, 82 ... operation control portion, 83 ... motor-torque acquisition portion, 84 ... left-screw-torque acquisition portion, 85 ... right-screw-torque derivation portion, 86 ... torque display portion, 87 ... alert notification portion, 90 ... control monitor system, 100 ... molding machine system

**Claims**

1.   A molding machine system comprising:

    a molding machine including: a cylinder; a first screw and a second screw embedded in the cylinder; and a motor rotationally driving the first screw and the second screw;
    a feature-amount identification apparatus identifying a feature amount related to an operation state of the molding machine;
    a torque detection device attached to a rotational shaft of the first screw and detecting a torque of the first screw;
    a torque derivation apparatus deriving a torque of the second screw from the feature amount identified by the feature-amount identification apparatus and the torque of the first screw detected by the torque detection device.

2.   The molding machine system according to claim 1,
    wherein the torque derivation apparatus derives the torque of the second screw while using a torque derivation function outputting the torque of the second screw in response to input of the feature amount and the torque of the first screw.

3.   The molding machine system according to claim 2,
    wherein the torque derivation apparatus determines the torque derivation function in accordance with an operation condition of the molding machine.

4.   The molding machine system according to claim 3,
    wherein the torque derivation apparatus stores a table obtained based on correspondence for each of the operation condition between the operation condition and a function to be used when the molding machine is operated under the operation condition, and determines a function corresponding to the set operation condition with reference to the table, and determines the determined function as the torque derivation function.

5.   The molding machine system according to claim 4,
    wherein the table is obtained based on correspondence between combination of a plurality of items and a function corresponding to the combination for each of the combination, the items being a source material to be introduced, a blending ratio of a material configuring the source material, a diameter of the cylinder, a length of the cylinder, a temperature of the cylinder, rotational speeds of the first screw and the second screw, a processing amount per unit time, a speed change ratio of a transmission interposed between the motor and the first and second screws, and configurations of the first screw and the second screw.

6.   The molding machine system according to claim 1,
    wherein the torque derivation apparatus derives the torque of the second screw while using a model prepared by machine learning.

7. The molding machine system according to claim 1, further comprising
a display portion displaying the torque of the first screw or a numerical value based on the torque of the first screw and the torque of the second screw or a numerical value based on the torque of the second screw.

8. The molding machine system according to claim 1 further comprising
a notification portion outputting an alert if the torque of the first screw or the torque of the second screw satisfies a determined condition.

9. The molding machine system according to claim 1,
wherein the feature-amount identification apparatus is a torque meter connected to the motor, and detects a torque of the motor as the feature amount.

10. The molding machine system according to claim 1,
wherein the feature-amount identification apparatus estimates a torque of the motor as the feature amount, based on a measurement value representing the operation state of the molding machine or an electric current supplied to the motor.

11. A torque derivation system deriving a torque of a screw configuring a molding machine, comprising:

a feature-amount identification apparatus;
a first-screw-torque acquisition apparatus; and
a second-screw-torque derivation apparatus,
wherein the molding machine includes:

a cylinder;
a first screw and a second screw embedded in the cylinder; and
a motor rotationally driving the first screw and the second screw,

the feature-amount identification apparatus identifies a feature amount related to an operation state of the molding machine,
the first-screw-torque acquisition apparatus acquires a torque of the first screw detected by a torque detection device attached to a rotational shaft of the first screw, and
the second-screw-torque derivation apparatus derives a torque of the second screw from the acquired torque of the motor and the acquired torque of the first screw.

12. The torque derivation system according to claim 11,
wherein the second-screw-torque derivation apparatus derives the torque of the second screw while using a torque derivation function outputting the torque of the second screw in response to input of the feature amount and the torque of the first screw.

13. The torque derivation system according to claim 12,
wherein the second-screw-torque derivation apparatus determines the torque derivation function in accordance with an operation condition of the molding machine.

14. The torque derivation system according to claim 13,
wherein the second-screw-torque derivation apparatus stores a table obtained for each type of the operation condition based on correspondence between the operation condition and a function to be used when the molding machine is operated under the operation condition, determines a function corresponding to the set operation condition with reference to the table, and determines the determined function as the torque derivation function.

15. The torque derivation system according to claim 14,
wherein the table is obtained based on correspondence between combination of a plurality of items and a function corresponding to the combination for each of the combination, the items being a source material to be introduced into the molding machine, a blending ratio of a material configuring the source material, a diameter of the cylinder, a length of the cylinder, a temperature of the cylinder, rotational speeds of the first screw and the second screw, a processing amount per unit time, a speed change ratio of a transmission interposed between the motor and the first and second screws, and configurations of the first screw and the second screw.

**16.** The torque derivation system according to claim 11,
wherein the second-screw-torque derivation apparatus derives the torque of the second screw from a model prepared by machine learning.

**17.** The torque derivation system according to claim 11,
wherein the feature amount is a torque of the motor.

**18.** A torque derivation method of deriving a torque of a screw configuring a molding machine, comprising:

a feature-amount acquisition step;
a first-screw-torque acquisition step; and
a second-screw-torque derivation step,
wherein the molding machine includes: a cylinder; a first screw and a second screw embedded in the cylinder; and a motor rotationally driving the first screw and the second screw,
in the feature-amount acquisition step, processing of acquiring a feature amount, related to an operation state of the molding machine and identified by a feature-amount identification apparatus identifying the feature amount, is executed,
in the first-screw-torque acquisition step, processing of acquiring a torque of the first screw, detected by a torque detection device attached to a rotational shaft of the first screw, is executed, and
in the second-screw-torque derivation step, processing of deriving a torque of the second screw from the acquired feature amount and the acquired torque of the first screw is executed.

**19.** The torque derivation method according to claim 18,
wherein, in the second-screw-torque derivation step, the torque of the second screw is derived while using a torque derivation function outputting the torque of the second screw in response to input of the feature amount and the torque of the first screw.

**20.** The torque derivation method according to claim 19,
wherein, in the second-screw-torque derivation step, the torque derivation function is determined in accordance with an operation condition of the molding machine.

**21.** The torque derivation method according to claim 20,
wherein, in the second-screw-torque derivation step, with reference to a table obtained based on correspondence for each of the operation condition between the operation condition and a function to be used when the molding machine is operated under the operation condition, a function corresponding to the set operation condition is determined, and the determined function is determined as the torque derivation function.

**22.** The torque derivation method according to claim 21,
wherein the table is obtained based on correspondence between combination of a plurality of items and a function corresponding to the combination for each of the combination, the items being a source material to be introduced into the molding machine, a blending ratio of a material configuring the source material, a diameter of the cylinder, a length of the cylinder, a temperature of the cylinder, rotational speeds of the first screw and the second screw, a processing amount per unit time, a speed change ratio of a transmission interposed between the motor and the first and second screws, and configurations of the first screw and the second screw.

**23.** The torque derivation method according to claim 18,
wherein, in the second-screw-torque derivation step, the torque of the second screw is derived while using a model prepared by machine learning.

**24.** The torque derivation method according to claim 18,
wherein the feature amount is a torque of the motor.

**25.** A program of deriving a torque of a screw configuring a molding machine,

wherein the program causes a computer to execute:

a feature-amount acquisition step;
a first-screw-torque acquisition step; and

a second-screw-torque derivation step,

the molding machine includes:

a cylinder;
a first screw and a second screw embedded in the cylinder; and
a motor rotationally driving the first screw and the second screw,

the feature-amount acquisition step is a step of acquiring a feature amount related to an operation state of the molding machine and identified by a feature-amount identification apparatus identifying the feature amount,
the first-screw-torque acquisition step is a step of acquiring a torque of the first screw detected by a torque detection device attached to a rotational shaft of the first screw, and
the second-screw-torque derivation step is a step of deriving a torque of the second screw from the acquired feature amount and the acquired torque of the first screw.

FIG. 1

FIG. 2

FIG. 3

## FIG. 4

## FIG. 5

*FIG. 6*

*FIG. 7*

OPERATION CONDITION SETTING PORTION — 81

OPERATION CONTROL PORTION — 82

MOTOR-TORQUE ACQUISITION PORTION — 83

LEFT-SCREW -TORQUE ACQUISITION PORTION — 84

RIGHT-SCREW -TORQUE ACQUISITION PORTION — 85

TORQUE DISPLAY PORTION — 86

ALERT NOTIFICATION PORTION — 87

*FIG. 8*

| OPERATION CONDITION | FUNCTION f |
|---|---|
| OPERATION CONDITION C1 | FUNCTION f1 |
| OPERATION CONDITION C2 | FUNCTION f2 |
| OPERATION CONDITION C3 | FUNCTION f3 |
| ⋮ | ⋮ |

## FIG. 9

```
                    ┌──────────────┐
                    │    START     │
                    └──────────────┘
                           │
           ┌───────────────────────────────┐
           │    SET OPERATION CONDITION     │── S1
           └───────────────────────────────┘
                           │
           ┌───────────────────────────────┐
           │        READ OUT FUNCTION       │── S2
           └───────────────────────────────┘
                           │
   No      ╱───────────────────────────────╲
  ┌────────│      IS THERE OPERATION         │── S3
  │        ╲   PREPARATION COMMAND?         ╱
  │         ╲───────────────────────────────╱
  │                        │ Yes
  │        ┌───────────────────────────────┐
  │        │       PREPARE OPERATION        │── S4
  │        └───────────────────────────────┘
  │                        │
  │ No     ╱───────────────────────────────╲
  │┌───────│      IS THERE OPERATION         │── S5
  ││       ╲      START COMMAND?            ╱
  ││        ╲───────────────────────────────╱
  ││                       │ Yes
  ││       ┌───────────────────────────────┐
  ││       │           OPERATE              │── S6
  ││       └───────────────────────────────┘
  ││                       │
  ││       ┌───────────────────────────────┐
  ││       │     ACQUIRE MOTOR TORQUE       │
  ││       │             AND                │── S7
  ││       │      LEFT SCREW TORQUE         │
  ││       └───────────────────────────────┘
  ││                       │
  ││       ┌───────────────────────────────┐
  ││       │      DERIVE RIGHT SCREW        │── S8
  ││       │      TORQUE BY FUNCTION        │
  ││       └───────────────────────────────┘
  ││                       │
  ││       ┌───────────────────────────────┐
  ││       │        DISPLAY TORQUE          │── S9
  ││       └───────────────────────────────┘
  ││                       │
  ││ No    ╱───────────────────────────────╲
  │├───────│  TORQUE > THRESHOLD VALUE?     │── S10
  ││       ╲───────────────────────────────╱
  ││                       │ Yes
  ││       ┌───────────────────────────────┐
  ││       │        OUTPUT ALERT            │── S11
  ││       └───────────────────────────────┘
  ││                       │
  ││ No    ╱───────────────────────────────╲
  └┼───────│     IS OPERATION STOPPED?      │── S12
   │       ╲───────────────────────────────╱
   │                       │ Yes
   │       ┌───────────────────────────────┐
   │       │        STOP OPERATION          │── S13
   │       └───────────────────────────────┘
   │                       │
   │               ┌──────────────┐
   │               │     END      │
   │               └──────────────┘
```

## INTERNATIONAL SEARCH REPORT

| International application No. |
|---|
| **PCT/JP2022/037336** |

| A. CLASSIFICATION OF SUBJECT MATTER |
|---|
| ***B29B 7/18***(2006.01)i; ***B29B 7/28***(2006.01)i; ***B29C 48/40***(2019.01)i; ***B29C 48/92***(2019.01)i<br>FI: B29C48/92; B29C48/40; B29B7/18; B29B7/28 |
| According to International Patent Classification (IPC) or to both national classification and IPC |

| B. FIELDS SEARCHED |
|---|
| Minimum documentation searched (classification system followed by classification symbols)<br>B29B7/18; B29B7/28; B29C48/40; B29C48/92 |
| Documentation searched other than minimum documentation to the extent that such documents are included in the fields searched<br>Published examined utility model applications of Japan 1922-1996<br>Published unexamined utility model applications of Japan 1971-2022<br>Registered utility model specifications of Japan 1996-2022<br>Published registered utility model applications of Japan 1994-2022 |
| Electronic data base consulted during the international search (name of data base and, where practicable, search terms used) |

| C. DOCUMENTS CONSIDERED TO BE RELEVANT |

| Category* | Citation of document, with indication, where appropriate, of the relevant passages | Relevant to claim No. |
|---|---|---|
| X | JP 2020-185666 A (HITACHI SHIPBUILDING ENG CO) 19 November 2020 (2020-11-19)<br>paragraphs [0016], [0021], [0023]-[0024], [0034], [0059]-[0061], fig. 1 | 1-5, 7-15, 17-22, 24-25 |
| Y | | 6, 16, 23 |
| Y | JP 2020-4037 A (CROSS COMPASS LTD) 09 January 2020 (2020-01-09)<br>paragraph [0002] | 6, 16, 23 |
| A | JP 2009-196302 A (KOBE STEEL LTD) 03 September 2009 (2009-09-03)<br>entire text, all drawings | 1-25 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 December 2022** | **27 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/037336**

| Patent document cited in search report | | | Publication date (day/month/year) | Patent family member(s) | | | Publication date (day/month/year) |
|---|---|---|---|---|---|---|---|
| JP | 2020-185666 | A | 19 November 2020 | (Family: none) | | | |
| JP | 2020-4037 | A | 09 January 2020 | JP | 6600857 | B1 | |
| JP | 2009-196302 | A | 03 September 2009 | (Family: none) | | | |

**EP 4 417 386 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021074964 A